# EUROPÄISCHE PATENTSCHRIFT

(11) **EP 4 008 993 B1**
(45) Veröffentlichungstag und Bekanntmachung des Hinweises auf die Patenterteilung: **18.03.2026**
(21) Anmeldenummer: 21209751.3
(22) Anmeldetag: 23.11.2021
(51) Int. Cl.: G01B 21/32, G01B 5/30, G01B 7/24, F03D 17/00

(54) **VERFAHREN ZUR DEHNUNGSMESSUNG AN EINEM BAUTEIL EINER WINDENERGIEANLAGE, ANORDNUNG ZUR DEHNUNGSMESSUNG, VERWENDUNG DER ANORDNUNG UND VERFAHREN ZUR MONTAGE DER ANORDNUNG**
METHOD FOR MEASURING THE STRAIN ON A COMPONENT OF A WIND POWER PLANT, ARRANGEMENT FOR STRAIN MEASUREMENT, USE OF THE ARRANGEMENT AND METHOD FOR MOUNTING THE ARRANGEMENT
PROCÉDÉ DE MESURE DE DÉFORMATION SUR UN COMPOSANT D'UNE ÉOLIENNE, AGENCEMENT DE MESURE DE DÉFORMATION, UTILISATION DE L'AGENCEMENT ET PROCÉDÉ DE MONTAGE DE L'AGENCEMENT

(30) Priorität: 04.12.2020 DE 102020132280
(43) Veröffentlichungstag der Anmeldung: 08.06.2022
(73) Patentinhaber: Wobben Properties GmbH, 26607 Aurich (DE)
(72) Erfinder: Bürkner, Falko, 28757 Bremen (DE); Flemming, Sören, 26725 Emden (DE)
(74) Vertreter: Eisenführ Speiser

(56) Entgegenhaltungen:
- CN-U- 203 274 631
- DE-A1- 102011 083 747
- DE-A1- 102014 218 518
- DE-C2- 19 847 982
- FR-A1- 2 784 178
- US-A- 4 064 744
- US-A1- 2011 288 447
- US-A1- 2020 226 480

## Beschreibung

Die Erfindung betrifft ein Verfahren zur Dehnungsmessung an einem Bauteil einer Windenergieanlage, insbesondere einem Rotorblatt, eine Anordnung zur Dehnungsmessung an einem Bauteil einer Windenergieanlage, insbesondere einem Rotorblatt, sowie eine Verwendung einer Anordnung zur Dehnungsmessung an einem Bauteil einer Windenergieanlage, insbesondere einem Rotorblatt. Ferner betrifft die Erfindung ein Verfahren zur Montage einer Anordnung zur Dehnungsmessung an einem Bauteil einer Windenergieanlage, insbesondere einem Rotorblatt.

Steigende Leistungen moderner Windenergieanlagen gehen mit immer größeren Rotorblättern und höheren Türmen einher. Dadurch steigen auch die mechanischen Belastungen dieser Strukturen. Durch hohe mechanische Belastungen, insbesondere durch von Windlasten erzeugte Biegemomente, kann es beispielsweise an den Rotorblättern zu Ausbeulungen, Delaminationen und Rissbildungen kommen. Um eine Zuverlässigkeit der Rotorblätter gewährleisten zu können, werden in der Regel Strukturtests, insbesondere zyklische Ermüdungstests, an Prüfständen für eine Modellvalidierung und eine Zertifizierung durchgeführt.

Im Rahmen von zyklischen Ermüdungstests werden Rotorblätter häufig mittels eines auf dem Rotorblatt montierten Elektromotors, auf dessen Welle sich ein exzentrisch angebrachtes Gewicht befindet, nahe ihrer Eigenfrequenz, beispielsweise zwischen 0,5 Hz und 1,5 Hz, in Schwingung versetzt. Hierbei werden Rotorblätter in der Regel über eine Breitseite des Blattprofils zwischen 1e6 bis 5e6 oder bis zu 1e7 Mal zyklisch gebogen. Insbesondere wird zwischen uniaxialen und biaxialen Ermüdungstests unterschieden. Bei uniaxialen Ermüdungstests wird das Rotorblatt sowohl in vertikaler als auch horizontaler Richtung, also in Schlagrichtung oder in Schwenkrichtung, separat belastet. Bei biaxialen Ermüdungstests wird das Rotorblatt gleichzeitig in Schlag- und Schwenkrichtung angeregt.

Auftretende Dehnungen an einer Oberfläche des Materials sind insbesondere an stark belasteten Bereichen der Rotorblätter, wie im Bereich eines Holmgurts, einer Endkante, einer Vorderkante und in einem äußeren Bereich, im Rahmen derartiger Ermüdungstests zu erfassen und zu überwachen. Hierzu sind im Stand der Technik beispielsweise Dehnungsmesstransformatoren mit Dehnungsmessstreifen bekannt. Die auftretenden Dehnungen sind oftmals sehr hoch, sodass die Dehnungsmessstreifen häufig schon nach wenigen Zyklen ausfallen können. Aufgrund immer elastisch werdender Materialien, die beim Rotorblatt zum Einsatz kommen, können Dehnungsmessstreifen beispielsweise unter Biegung reißen und dadurch ausfallen. Ein Ausfall der Dehnungsmessstreifen hat zusätzliche Kosten durch eine Testunterbrechung, insbesondere eine Erforderlichkeit eines Neustarts des Ermüdungstests bzw. einer Wiederholung des Testtages, und eine Verschiebung eines Termins für eine Zertifizierung zur Folge. Darüber hinaus sind Dehnungsmessstreifen in der Regel darauf ausgelegt, Dehnungen nur auf relative kleinen Flächen, wie beispielsweise einem 10 mm langen Messgitter, zu messen. Aufgrund der geringen Abmessungen der Dehnungsmessstreifen kann häufig eine erwünschte Genauigkeit nicht erreicht werden. Zudem können Messfehler auftreten, indem beispielweise nicht die Dehnung des Materials selbst, sondern eine abweichende Dehnung, insbesondere von Harznestern, gemessen werden.

Bekannte Verfahren und Anordnungen mit einem induktiven Abstandssensor, der eine berührungslose Messung ermöglicht, zu einer kontinuierlichen Überwachung auftretender Schwingungen an Rotorblättern während des Betriebs der Windenergieanlage eignen sich in der Regel nicht für die Anwendung am Prüfstand im Rahmen zyklischer Ermüdungstests. Derartige Verfahren und Anordnungen, wie beispielsweise aus der Druckschrift DE 198 47 982 C2 bekannt, sind insbesondere dafür ausgelegt, an einer Innenseite des Rotorblatts im Bereich der Wurzel angeordnet zu werden und daher wesentlich geringeren Belastungen standzuhalten.

Das Deutsche Patent- und Markenamt, bzw. das europäische Patentamt hat in der Prioritätsanmeldung zu vorliegender Anmeldung folgenden Stand der Technik recherchiert: DE 198 47 982 C2, DE 10 2014 218 518 A1, DE 11 2018 004 704 T5, US 4 651 436 A, EP 2 037 212 A1, WO 2003/ 029 750 A1, US 2011/288447 A1, US 4 064 744 A, CN 203 274 631 U, DE 10 2011 083747 A1, FR 2 784 178 A1 und US 2020/226480 A1.

Es ist daher eine Aufgabe, ein Verfahren zur Dehnungsmessung an einem Bauteil einer Windenergieanlage, insbesondere einem Rotorblatt, eine Anordnung zu einer derartigen Dehnungsmessung, eine Verwendung einer Anordnung zu einer derartigen Dehnungsmessung und ein Verfahren zur Montage einer Anordnung zur Dehnungsmessung an einem Bauteil einer Windenergieanlage, insbesondere einem Rotorblatt, bereitzustellen, die einen oder mehrere der genannten Nachteile existierender Lösungen vermindern oder beseitigen. Es ist insbesondere eine Aufgabe, eine Lösung bereitzustellen, die eine höhere Genauigkeit einer Dehnungsmessung in einem Prüfstand bei einem zyklischen Ermüdungstest gewährleistet und gleichzeitig zuverlässig den auftretenden Dehnungswechsel und Zyklen eines zyklischen Ermüdungstests standhält.

Gemäß einem ersten Aspekt wird die Aufgabe gelöst durch ein Verfahren zur Dehnungsmessung an einem Bauteil einer Windenergieanlage nach Anspruch 1.

In der hier beschriebenen Lösung ist ein Verfahren vorgesehen, das ein zyklisches Erfassen einer Dehnung eines Bauteils ermöglicht. Hierzu sind ein Sensorhalter mit einer Sensoreinheit und ein Gegenhalter vorgesehen, die an einer Oberfläche zueinander ausgerichtet und ortsfest angebracht werden können, um die Änderung des Abstands zwischen dem Sensorhalter und dem Gegenhalter mittels der Sensoreinheit zyklisch erfassen zu können. Der Sensorhalter kann hierbei die Änderung des Abstands auf der Höhe der von der Oberfläche beabstandeten Messachse erfassen. Insbesondere entspricht die Höhe der Messachse einer Höhe, in der die Sensoreinheit über der Oberfläche des Bauteils angeordnet werden kann. Bei der zyklischen Berechnung der Dehnung des Bauteils wird die zyklisch erfasste Änderung des Abstands mit der Höhe der Messachse korrigiert. Alternativ oder ergänzend wird die zyklisch erfasste Änderung des Abstands mit der neutralen Faser des Bauteils korrigiert. Dadurch kann die Dehnung des Bauteils zyklisch berechnet werden.

Durch ein derartiges Verfahren kann eine höhere Genauigkeit einer Dehnungsmessung in einem Prüfstand bei einem zyklischen Ermüdungstest gewährleistet werden. Zudem kann sichergestellt werden, dass ein zyklischer Ermüdungstest ohne Unterbrechung bei sehr hohen Dehnungswechsel und sehr viele Zyklen durchgeführt werden kann. Insbesondere können dadurch auftretende Dehnungen an einer Oberfläche des Materials an stark belasteten Bereichen der Rotorblätter, wie im Bereich eines Holmgurts, einer Endkante und in einem äußeren Bereich, zuverlässig gemessen werden.

Insbesondere kann unter den definierten Ausganspositionen verstanden werden, dass der Sensorhalter und der Gegenhalter in den definierten Ausgangspositionen in einem exakt definierten Abstand zueinander ortsfest an der Oberfläche des Bauteils angebracht werden können. Ferner können der Sensorhalter und der Gegenhalter in den definierten Ausgangspositionen zueinander ausgerichtet sein und insbesondere eine exakte Längsausrichtung aufweisen. Dadurch kann gewährleistet werden, dass eine Änderung des Abstands zwischen dem Sensorhalter und dem Gegenhalter exakt bestimmt werden kann.

Unter dem Sensorhalter kann vorzugsweise jegliche Art von Halteelement verstanden werden, das ausgebildet ist, um einerseits auf der Oberfläche des Bauteils angeordnet zu werden und andererseits eine Sensoreinheit auf Höhe der Messachse sicher zu halten, insbesondere ortsfest zu fixieren. Insbesondere bevorzugt kann der Sensorhalter eine Art Klotz sein, der eine Durchgangsöffnung auf Höhe der Messachse zum Aufnehmen der Sensoreinheit aufweist. Vorzugsweise kann die Sensoreinheit durch die Durchgangsöffnung hindurchgeführt werden und in einer definierten Position fixiert werden. Beispielsweise kann die Sensoreinheit in der Durchgangsöffnung geklemmt werden. Insbesondere kann die Sensoreinheit in der Durchgangsöffnung mittels einer Schraube, insbesondere einer Plastikschraube, geklemmt werden. Vorzugsweise kann der Sensorhalter ein Sackloch aufweisen, das sich orthogonal zu und von einer Seite des Sensorhalters bis zu der Durchgangsöffnung erstreckt. Insbesondere durch ein Verschrauben einer Schraube, insbesondere einer Plastikschraube, in dem Sackloch kann die Sensoreinheit in der Durchgangsöffnung geklemmt werden.

Der Gegenhalter kann vorzugsweise im Wesentlichen wie der Sensorhalter als eine Art Klotz ausgestaltet sein. Insbesondere kann der Gegenhalter vorzugsweise jegliche Art von Halteelement sein, das ausgebildet ist, um einerseits auf der Oberfläche des Bauteils angeordnet zu werden und andererseits ein Gegenelement der Sensoreinheit zum Erfassen der Änderung des Abstands zu bilden oder aufzunehmen. Vorzugsweise können der Sensorhalter und der Gegenhalter im Wesentlichen baugleich ausgebildet sein.

Die Sensoreinheit kann insbesondere ein Sensorelement umfassen, dass ausgebildet ist, um die Änderung des Abstands zwischen dem Sensorhalter, an dem die Sensoreinheit angeordnet ist, und dem Gegenhalter zu erfassen und einen entsprechenden Messwert zu liefern. Insbesondere kann ein induktiver Wegsensor verwendet werden, um die Änderung des Abstands zu erfassen. Besonders bevorzugt ist ein berührend arbeitender, induktiver Wegsensor. Beispielsweise kann ein LVDT-Sensor (Linear Variable Differential Transformer) und ein Messtaster vorgesehen sein. Ein LVDT-Sensor und induktive Messtaster arbeiten beispielsweise mit einem mit dem Messobjekt, wie hier einem Gegenelement, verbundenen Tastelement mit einem ferromagnetischen Kern, der in ein Magnetfeld eintaucht und dieses dadurch verändert. Die Sensoreinheit kann vorzugsweise eine Primärspule und Sekundärspulen umfassen. Die Primärspule kann mit einer Wechselspannung versorgt werden. Über den Kern, der im Inneren der Spule beweglich, insbesondere axial verschieblich, angebracht ist, kann eine Spannung in den Sekundärspulen induziert werden. Diese ändert sich vorzugweise, wenn sich dieser Kern, der mit dem Messobjekt über das Tastelement verbunden ist, bewegt, und liefert dadurch ein Maß für dessen Auslenkung. Das Tastelement kann einen Tastkopf aufweisen und über diesen Tastkopf mit dem Gegenelement, also dem Messobjekt, in Verbindung steht. Insbesondere kann das Tastelement zudem eine Rückstellfeder aufweisen. Die Rückstellfeder kann beispielsweise in einem Bereich eines Gleitlagers angeordnet sein. Dadurch kann das Sensorelement mit Hilfe des Gegenelements im Sensorhalter eingespannt werden. Insbesondere bevorzugt kann in etwa eine Mitte eines verfügbaren Hubes des LVDT-Sensors eingestellt werden.

Gegenüber berührungslosen Sensoren hat dieses Messprinzip entscheidende Vorteile. Eine induzierte Spannungsänderung ist bei berührungslos arbeitenden Sensoren nicht linear und in der Regel erfolgt auch keine Linearisierung. Daher ist bei berührungslosen Sensoren mit größeren Messungenauigkeiten zu rechnen. Ein weiterer Nachteil ist eine relativ hohe Temperaturabhängigkeit, die durch die Temperaturabhängigkeit einer Permeabilität des Ferritkerns verursacht wird. Aus diesem Grund eignet sich ein berührungslos arbeitendes Messprinzip nicht für den Einsatz am Prüfstand.

Besonders bevorzugt, kann die Sensoreinheit unmittelbar am Sensorhalter angeordnet werden. Vorzugsweise kann ein Tastkopf eines Tastelements der Sensoreinheit unmittelbar am Sensorhalter angeordnet sein.

Die Messachse kann insbesondere im Wesentlichen parallel zu der Oberfläche des Bauteils verlaufen. Vorzugsweise kann die Höhe der Messachse zwischen 5 mm und 50 mm, vorzugsweise zwischen 10 mm und 12 mm über der Oberfläche des Bauteils betragen. Insbesondere kann eine minimale Höhe der Messachse über der Oberfläche des Bauteils 5 mm, 6 mm, 7 mm, 8 mm, 9 mm oder 10 mm betragen. Insbesondere kann eine maximale Höhe der Messachse über der Oberfläche des Bauteils 10 mm, 11 mm, 12 mm, 15 mm, 20 mm, 25 mm, 30 mm, 40 mm oder 50 mm betragen. Insbesondere kann durch eine geringe Höhe über der Messachse eine notwendige Korrektur des erfassten Werts einer Änderung des Abstands zwischen dem Sensorhalter und dem Gegenhalter durch die Berechnung der Dehnung des Bauteils minimiert werden. Durch diese Höhe kann sichergestellt werden, dass die Änderung des Abstands an der Oberfläche verhältnismäßig genau im Vergleich zu größeren Höhen erfasst werden kann, um die Dehnung des Bauteils unter Berücksichtigung der Höhe berechnen zu können.

Unter einer neutralen Faser des Bauteils kann insbesondere eine Nulllinie verstanden werden. In der Festigkeitslehre kann unter der neutralen Faser eine Faser oder Schicht eines Balkenquerschnitts verstanden werden, deren Länge sich bei Verdrehen bzw. Biegen nicht ändert. Entsprechend wird vorzugweise an der neutralen Faser durch die Beanspruchung keine Zug- oder Druckspannung verursacht.

Besonders bevorzugt kann der Schritt des zyklischen Erfassens der Änderung des Abstands zwischen dem Sensorhalter und dem Gegenhalter ein Anregen des Bauteils zu einer Eigenfrequenzschwingung umfassen.

Insbesondere bevorzugt kann durch das zyklische Erfassen der Änderung des Abstands zwischen dem Sensorhalter und dem Gegenhalter eine Bewegung des Sensorhalters und des Gegenhalters auf Höhe der Messachse erfasst werden. Insbesondere wird hierbei die Bewegung des Mittelpunkts des Gegenhalters auf der Messachse und des Mittelpunkts des Sensorhalters auf der Messachse erfasst.

Insbesondere ist das Verfahren geeignet, um an einem Prüfstand bei einem zyklischen Ermüdungstest, insbesondere mit Dehnungsschwingweiten von mehr als 3000 µm/m, insbesondere zwischen 3000 µm/m und 4000 µm/m oder mehr als 4000 µm/m und/oder mehr als 1e6 Zyklen, insbesondere mehr als 1e7, Zyklen, zur Dehnungsmessung an einem Bauteil einer Windenergieanlage, insbesondere einem Rotorblatt, insbesondere in einem Außenbereich und/oder einer Endkante und/oder an einem Holmgurt, zum Einsatz zu kommen.

Die Angaben 1e6 und 1e7, Zyklen sind in wissenschaftlicher Schreibweise angegeben. Das "e" ("Engineering notation") steht hierbei für 10^{x}, wobei x gleich 6 bzw. 7 ist. Somit kann ein Ermüdungstest insbesondere mehr als eine Million oder mehr als 10 Millionen Zyklen umfassen.

Insbesondere bevorzugt kann das Verfahren ferner den Schritt Nullen der Sensoreinheit vor dem zyklischen Erfassen der Änderung des Abstands zwischen dem Sensorhalter und dem Gegenhalter umfassen.

In einer weiteren bevorzugten Ausführungsvariante sieht das zyklische Erfassen der Änderung des Abstands zwischen dem Sensorhalter und dem Gegenhalter Dehnungsschwingweiten von mehr als 3000 µm/m, insbesondere zwischen 3000 µm/m und 4000 µm/m oder mehr als 4000 µm/m vor.

Es ist besonders bevorzugt, wenn das zyklische Erfassen der Änderung des Abstands zwischen dem Sensorhalter und dem Gegenhalter mehr als 1e6, insbesondere mehr als 1e7, Zyklen vorsieht

Gemäß einer weiter bevorzugten Ausführungsvariante ist vorgesehen, dass durch das zyklische Erfassen einer Änderung eines Abstands zwischen dem Sensorhalter und dem Gegenhalter und durch das zyklische Berechnen der Dehnung des Bauteils die Dehnung des Bauteils über einen Materialbereich zwischen 11 mm und 1 m, insbesondere zwischen 50 mm und 500 mm, insbesondere 200 mm, gemittelt erfasst wird.

Vorzugsweise kann bei einer Dehnungsmessung an einem Rotorblatt vorgesehen sein, dass durch das zyklische Erfassen einer Änderung eines Abstands zwischen dem Sensorhalter und dem Gegenhalter und durch das zyklische Berechnen der Dehnung des Bauteils die Dehnung des Bauteils über einen Materialbereich von mindestens 11 mm, insbesondere zwischen 50 mm und 500 mm, insbesondere 200 mm, gemittelt erfasst wird.

Vorzugsweise kann bei einer Dehnungsmessung an einem Turm einer Windenergieanlage vorgesehen sein, dass durch das zyklische Erfassen einer Änderung eines Abstands zwischen dem Sensorhalter und dem Gegenhalter und durch das zyklische Berechnen der Dehnung des Bauteils die Dehnung des Bauteils über einen Materialbereich von mindestens zwischen 50 mm und 1 m, insbesondere 1 m, gemittelt erfasst wird.

Insbesondere kann hierbei der Sensorhalter in seiner definierten Ausgangsposition und der Gegenhalter in seiner definierten Ausgangsposition zwischen 11 mm und 1 m, insbesondere zwischen 50 mm und 500 mm, insbesondere 200 mm, voneinander beabstandet sein. Dadurch kann die Dehnung lokal über diesen Materialbereich gemittelt erfasst werden.

Im Vergleich zu einer Messung mittels Dehnungsmessstreifen wird die Dehnung daher über einen größeren Bereich gemessen. Dadurch kann die Genauigkeit der Messung erhöht, Messfehler reduziert oder verhindert und eine bessere Vergleichbarkeit der Messungen gewährleistet werden.

Das Verfahren umfasst ein Bereitstellen einer an dem Gegenhalter angeordneten Koppelstange, die sich ausgehend von dem Gegenhalter in Richtung einem axial verschieblich geführten Tastelement der Sensoreinheit erstreckt und vorzugsweise während dem zyklischen Erfassen der Änderung des Abstands zwischen dem Sensorhalter und dem Gegenhalter mit dem Tastelement in Verbindung steht, wobei der Schritt des Erfassens der Änderung des Abstands zwischen dem Sensorhalter und dem Gegenhalter ein Erfassen einer Änderung einer Position des Tastelements umfasst. Bevorzugt kann die Koppelstange während dem zyklischen Erfassen der Änderung des Abstands zwischen dem Sensorhalter und dem Gegenhalter mit der Sensoreinheit in Verbindung stehen. Erfindungsgemäß umfasst der Schritt des Erfassens der Änderung des Abstands zwischen dem Sensorhalter und dem Gegenhalter ein Erfassen einer Änderung einer Position eines Tastelements der Sensoreinheit.

Die Koppelstange kann hierbei vorzugsweise als Gegenelement für die Sensoreinheit dienen. Das Bereitstellen der Koppelstange kann insbesondere ein Einführen eines Endes der Koppelstange in eine Ausnehmung des Gegenhalters umfassen.

Die Koppelstange kann vorzugsweise als ein Stab ausgebildet sein. Demnach kann die Koppelstange insbesondere länglich, vorzugsweise zylindrisch oder mehreckig, ausgestaltet sein. Die Koppelstange kann insbesondere eine Erstreckung in Längsrichtung aufweisen, die größer ist als eine Erstreckung in Richtung einer Höhe und/oder einer Breite.

Insbesondere bevorzugt kann die Koppelstange in Längsrichtung steif ausgebildet sein.

Vorzugsweise kann die Koppelstange aus einem Material ausgebildet sein, das einem Material des Bauteils entspricht. Dadurch kann insbesondere eine Temperaturausdehnung automatisch kompensiert werden. Beispielsweise kann die Koppelstange Verbundwerkstoff und/oder Aluminium und/oder glasfaserverstärkten Kunststoff und/oder Kohlenstofffasern und/oder Balsaholz und/oder Polyesterharz und/oder Vinylesterharz und/oder Epoxydharz umfassen oder daraus bestehen.

Vorzugsweise kann die Koppelstange mit dem axial verschieblich geführten Tastelement der Sensoreinheit in Verbindung stehen. Insbesondere kann das axial verschieblich geführte Tastelement einen Tastkopf aufweisen, der mit der Koppelstange in Verbindung steht.

Insbesondere kann die Verbindung zwischen Sensoreinheit bzw. Tastelement bzw.

Tastkopf während dem zyklischen Erfassen der Änderung des Abstands zwischen dem Sensorhalter und dem Gegenhalter bestehen bleiben. Dadurch wird ein berührendes Messprinzip gewährleistet.

Das Tastelement kann vorzugsweise als gefedertes Tastelement ausgebildet sein und eine Rückstellfeder aufweisen. Die Rückstellfeder kann beispielsweise in einem Bereich eines Gleitlagers angeordnet sein. Dadurch kann das Sensorelement mit Hilfe des Gegenelements im Sensorhalter eingespannt werden. Durch das Vorhandensein der Rückstellfeder können beispielweise Beschädigungen an der Anordnung während der Dehnungsmessung verhindert werden.

Insbesondere kann die Koppelstange auch fixierungsfrei, also ohne eine Fixierung, in der Ausnehmung des Gegenelements angeordnet sein und durch die Verspannung mittels der Sensoreinheit, insbesondere der Rückstellfeder des Tastelements in Position gehalten werden. Beispielsweise kann die Ausnehmung hierbei eine Vertiefung in einer der Koppelstange zugewandten Seite des Gegenhalters sein, in der die Koppelstange anliegt.

Erfindungsgemäß wird die Änderung des Abstands zwischen dem Sensorhalter und dem Gegenhalter durch ein Erfassen einer Änderung der Position des Tastelements erfasst.

Besonders bevorzugt kann die Sensoreinheit ein gefedertes Tastelement, eine Spulenanordnung und einen mit dem Tastelement verbundenen, gegenüber der Spulenanordnung koaxial verschieblichen ferromagnetischen Kern umfassen, wobei der Schritt des Erfassens der Änderung des Abstands zwischen dem Sensorhalter und dem Gegenhalter ein Erfassen einer Änderung einer Position des Kerns in einem Spulenelement der Sensoreinheit umfasst.

Insbesondere kann eine Differenz zwischen einer Länge der Koppelstange und eines Abstands zwischen dem Sensorhalter und dem Gegenhalter in etwa 50 mm betragen. Vorzugsweise kann die Differenz zwischen einer Länge der Koppelstange und eines Abstands zwischen dem Sensorhalter und dem Gegenhalter maximal 50 mm oder 40 mm oder 30 mm oder 20 mm oder 10 mm betragen. Insbesondere bevorzugt kann die Koppelstange eine Länge aufweisen, die in etwa einem Abstand zwischen dem Sensorhalter und dem Gegenhalter entspricht. Dadurch kann insbesondere eine ideale Temperaturkompensation erreicht werden.

Vorzugsweise kann sich die Sensoreinheit ausgehend von dem Sensorhalter in Richtung des Gegenhalters auf der Messachse erstrecken. Insbesondere kann sich die Sensoreinheit ausgehend von dem Sensorhalter, insbesondere einem Mittelpunkt des Sensorhalters auf der Messachse, auf einer Länge der Messachse von etwa 50 mm oder maximal 50 mm oder maximal 40 mm oder maximal 30 mm oder maximal 20 mm oder maximal 10 mm erstrecken.

Gemäß einer weiteren Ausführungsvariante umfasst das Verfahren ein Ausgleichen einer bei dem zyklischen Erfassen der Änderung des Abstands auftretenden Verkippung des Sensorhalters und/oder des Gegenhalters, sodass vorzugsweise die Koppelstange im Wesentlichen auf der Messachse verbleibt.

Unter einer Verkippung kann insbesondere verstanden werden, dass der Sensorhalter und/oder der Gegenhalter aus der definierten Ausgangsposition bewegt wird, insbesondere aufgrund auftretender Belastungen. Hierbei kann beispielsweise der Sensorhalter und/oder der Gegenhalter verdreht oder an einer Stelle von der Bauteiloberfläche abgehoben werden. Durch eine derartige Verkippung können der Sensorhalter und der Gegenhalter beispielsweise nicht mehr exakt zueinander ausgerichtet sein. Ohne einen Ausgleich einer derartigen Verkippung, könnten Messfehler und Messungenauigkeiten auftreten oder die Anordnung zur Dehnungsmessung beschädigt werden.

Das Ausgleichen einer auftretenden Verkippung kann insbesondere automatisch erfolgen.

Vorzugsweise kann das Ausgleichen einer auftretenden Verkippung durch eine Lagerung eines konvexen Endes der Koppelstange in einer konkaven Ausnehmung des Gegenhalters gewährleistet werden. Das Ausgleichen einer auftretenden Verkippung wird durch eine Lagerung eines der Koppelstange zugewandten Endes der Sensoreinheit, insbesondere eines Tastkopfs des axial verschieblich geführten Tastelements, in einer konkaven Rundung eines konkaven Endes der Koppelstange gewährleistet.

Gemäß einem weiteren Aspekt wird die Aufgabe gelöst durch eine Anordnung zur Dehnungsmessung an einem Bauteil einer Windenergieanlage, insbesondere einem Rotorblatt, umfassend einen Sensorhalter und einen Gegenhalter, die ausgebildet sind, um in definierten Ausgangspositionen zueinander ortsfest angebracht zu werden, und eine von dem Sensorhalter gehaltene Sensoreinheit, wobei die Sensoreinheit ausgebildet ist, um eine Änderung eines Abstands zwischen dem Sensorhalter und dem Gegenhalter auf Höhe einer von der Oberfläche des Bauteils beabstandeten Messachse zu erfassen. Die erfindungsgemäße Anordnung zur Dehnungsmessung ist im Anspruch 7 beansprucht.

In der hier beschriebenen Lösung wird eine Anordnung bereitgestellt, die eine Dehnungsmessung an einem Bauteil einer Windenergieanlage, insbesondere einem Rotorblatt, ermöglicht. Hierzu sind ein Sensorhalter mit einer Sensoreinheit und ein Gegenhalter vorgesehen, die an einer Oberfläche zueinander ausgerichtet und ortsfest angebracht werden können, um die Änderung des Abstands zwischen dem Sensorhalter und dem Gegenhalter mittels der Sensoreinheit erfassen zu können. Der Sensorhalter kann hierbei die Änderung des Abstands auf der Höhe der von der Oberfläche beabstandeten Messachse erfassen. Insbesondere entspricht die Höhe der Messachse einer Höhe, in der die Sensoreinheit über der Oberfläche des Bauteils angeordnet werden kann.

Vorzugsweise kann die Sensoreinheit ausgebildet sein, um die Änderung des Abstands zwischen dem Sensorhalter und dem Gegenhalter zyklisch zu erfassen.

Insbesondere kann die Sensoreinheit ein Signal des Sensors, das vorzugsweise die Änderung des Abstands zwischen dem Sensorhalter und dem Gegenhalter repräsentiert, an eine Recheneinheit übermitteln, die ausgebildet ist, um die Dehnung des Bauteils zyklisch zu Berechnen. Insbesondere kann hierbei eine Korrektur unter Berücksichtigung der Höhe der Messachse und/oder der neutralen Faser erfolgen.

Vorzugsweise kann die Anordnung ausgebildet sein, um ein Verfahren, wie vorstehend beschrieben, auszuführen.

Durch eine derartige Anordnung kann eine höhere Genauigkeit einer Dehnungsmessung in einem Prüfstand bei einem zyklischen Ermüdungstest gewährleistet werden. Zudem kann sichergestellt werden, dass ein zyklischer Ermüdungstest ohne Unterbrechung bei sehr hohen Dehnungswechsel und sehr viele Zyklen durchgeführt werden kann. Insbesondere können dadurch auftretende Dehnungen an einer Oberfläche des Materials an stark belasteten Bereichen der Rotorblätter, wie im Bereich eines Holmgurts, an einer Endkante und in einem äußeren Bereich, zuverlässig gemessen werden.

Eine bevorzugte Fortbildung der Anordnung zeichnet sich dadurch aus, dass die Anordnung ein Klebemittel, insbesondere ein doppelseitiges Klebeband umfasst, das ausgebildet ist, um den Sensorhalter und den Gegenhalter ortsfest auf der Oberfläche des Bauteils zu fixieren, wobei vorzugsweise das Klebemittel Acrylat umfasst oder aus Acrylat besteht und/oder eine Haftkraft von mindestens 300 N/100 mm aufweist und/oder ausgebildet ist, um einer Scherspannung von mindestens 400 kPa zu widerstehen.

Insbesondere bevorzugt kann ein Klebeband, vorzugsweise doppelseitig, oder eine Klebefolie für die Befestigung des Sensorhalters und des Gegenhalters auf der Oberfläche vorgesehen sein. Klebebänder bzw. Klebefolien sind vorzugsweise weniger steif im Vergleich zu anderen Klebstoffen. Dadurch wird eine Gefahr eines Einreißens reduziert oder verhindert. Die hier vorgeschlagene Verklebung mittels eines Klebebands oder einer Klebefolie ist insbesondere eine weiche Verklebung. Eine derartige weiche Verklebung zeichnet sich insbesondere dadurch aus, dass diese eine im Vergleich zu einer Verklebung mit anderen Klebstoffen, insbesondere Flüssigklebstoffen, die eine höhere Steifigkeit und/oder Sprödheit aufweisen, eine höhere Elastizität aufweist. Andere Klebstoffe können beispielsweise Secundenkleber LOCTITE 401 (Ethyl-Cyanacrylat), LOCTITE HY 4080 (Methacrylate und Cyanacrylat), LOCTITE HY 4090 (Epoxidharz und Cyanacrylat) und S25 Henkel (PU) sein.

Das Klebeband oder die Klebefolie kann insbesondere einen Schaumstoffträger aufweisen, der vorzugsweise einseitig oder beidseitige einen Allzweckkleber, insbesondere Allzweck-Acryl, umfassen kann. Insbesondere kann ein Schaumstofftyp mit einer fest geschlossener Zellstruktur vorgesehen sein.

Insbesondere kann das Klebemittel aus Acryl bestehen. Das Acryl-Klebemittel weist eine Viskosität auf, um in eine Oberfläche, insbesondere des Bauteils und/oder des Sensorhalters und/oder des Gegenhalters, einzufließen.

Vorzugsweise kann das Klebeband oder die Klebefolie ausgebildet sein, um nicht zu verhärten. Dadurch kann eine Flexibilität während der Dehnungsmessung gewährleistet werden.

Vorzugsweise kann das Klebeband Differentialbewegungen in einer Scherebene bis zu einem Dreifachen seiner Dicke tolerieren. Insbesondere kann eine Scherspannung eines dynamischen Überlappungs-Schertest, mindestens 400 kPa, insbesondere mindestens oder etwa 415 kPa, betragen. Im Rahmen des dynamischen Schertests kann insbesondere eine maximale Kraft zum Trennen auf Edelstahl, bei Raumtemperatur, 6.45 cm², bei einer Backengeschwindigkeit einer Testanlage von 12,7 mm/min gemessen werden. Eine Scherung resultiert vorzugsweise aus einer Wirkung eines versetzt angeordneten Kräftepaars, einer Scherkraft oder einer Schubkraft, auf einen Körper und führt zu einer Schubverzerrung des zwischen den Kräften liegenden Bereichs. Mit der Schubverzerrung bewirkt das Kräftepaar die Scherspannung, auch Schubspannung genannt, wobei ein Schermodul, auch Schubmodul, Gleitmodul (G-Modul) oder Torsionsmodul genannt, eine Größe der Verzerrung relativ zur anliegenden Schubspannung beschreibt.

Der Schubmodul G kann insbesondere mit einem Elastizitätsmodul E, einer Querkontraktionszahl v (Poissonzahl) und einem Kompressionsmodul K in Beziehung stehen. Das Klebeband oder die Klebefolie kann insbesondere linear-elastisches Material umfassen oder aus linear-elastischem Material bestehen. Für den Schubmodul kann sich insbesondere ergeben 1/3 E < G > 1/2 E.

Insbesondere kann das Klebeband oder die Klebefolie eine Dicke von etwa 1 mm bis 2 mm, insbesondere zwischen 1,3 mm und 1,8 mm, insbesondere 1,55 mm, aufweisen.

Vorzugsweise kann ein statischer Schertest ergeben, dass 322,58 mm² der Klebefolie oder des Klebebands folgendes Gewicht sieben Tage hält: 1500 g bei 22 °C und/oder 750 g zwischen 66 °C und 177 °C. Der statische Schertest kann insbesondere auf Edelstahl durchgeführt werden.

Insbesondere bevorzugt kann das Klebeband oder die Klebefolie eine Zugfestigkeit von mindestens 500 kPa, insbesondere von mindestens oder etwa 550 kPa aufweisen. Die Zugfestigkeit kann sich insbesondere auf eine normale Zugfestigkeit beziehen, wobei vorzugsweise eine maximale Kraft auf Aluminium, bei Raumtemperatur und einer Backengeschwindigkeit einer Testanlage von 50 mm/min.

Vorzugsweise kann die Haftkraft eine 90° Haftkraft sein. Vorzugsweise kann das Klebeband oder die Klebefolie eine 90° Haftkraft von mindestens 300 N/100 mm, insbesondere von etwa oder mindestens 315 N/100 mm aufweisen. Die 90° Haftkraft kann auf Edelstahl, bei Raumtemperatur und einer Backengeschwindigkeit einer Testanlage von 305 mm/min bestimmt werden, wobei vorzugsweise eine durchschnittliche Kraft gemessen wird.

Dadurch kann eine mittlere Dehnung und/oder Bewegung über eine Klebefläche übertragen werden.

Durch eine derartige Verklebung des Sensorhalters und des Gegenhalters auf der Oberfläche kann insbesondere gewährleistet werden, dass eine Bewegung des Sensorhalters und des Gegenhalters auf Höhe der Messachse, insbesondere des Mittelpunkts des Gegenhalters auf der Messachse und des Mittelpunkts des Sensorhalters auf der Messachse, erfasst werden. Dadurch kann eine sehr genaue Messung der Dehnung gewährleistet werden.

Der Einsatz eines Klebebands, insbesondere eines doppelseitigen Klebebands, gewährleistet eine gleichmäßig zähe Verklebung. Dadurch können insbesondere Risse in der Klebung, die in Längsrichtung zum Balken verlaufen können, vermieden werden. Zudem kann durch den Einsatz eines doppelseitigen Klebebands eine besonders einfache Klebung erfolgen, die sowohl Montagezeit einspart als auch ein Risiko einer fehlerhaften Montage reduziert oder verhindert. Der Einsatz eines Klebebands hat im Vergleich zu klassischen Fügeverfahren weitere Vorteile. Beispielsweise sorgen Klebebänder für eine gleichmäßige Kraftverteilung über die gesamte Klebefläche. Dadurch können Spannungsspitzen vermieden werden. Darüber hinaus bleiben insbesondere Oberflächen unverändert und die Anordnung kann insbesondere nach einem Ermüdungstest ohne Beschädigung von der Oberfläche entfernt werden. Ferner können beispielsweise Bauteiltoleranzen ausgeglichen werden. Beispielsweise kann ein Klebeband auch eine gute Dichtfunktion als Schutz vor einem Eindringen von Schmutz und Feuchte, die gegebenenfalls eine Auswirkung auf die Klebung haben könnten, haben.

Das vorgesehene Klebemittel zeichnet sich insbesondere dadurch aus, dass die Klebung Dehnungsschwingweiten von mehr als 3000 µm/m, insbesondere zwischen 3000 µm/m und 4000 µm/m oder mehr als 4000 µm/m, insbesondere bei mehr als 1e6, insbesondere 1e7, Zyklen, standhält.

Alternativ oder ergänzend kann beispielsweise Klebestoff auf einer Unterseite und/oder in einer dafür vorgesehenen Fuge an der Unterseite des Sensorhalters und/oder des Gegenhalters angebracht werden, um diese an der Oberfläche zu befestigen.

Gemäß einer bevorzugten Ausführungsvariante ist / sind der Sensorhalter und/oder der Gegenhalter eckig, insbesondere quadratisch oder quaderförmig ausgebildet. Durch diese Ausgestaltung können der Sensorhalter und der Gegenhalter besonders einfach und präzise zueinander ausgerichtet werden. Darüber hinaus kann beispielsweise eine Bereitstellung eines Klebebands und das Anbringen des Klebebands vereinfacht werden. Insbesondere kann ein exaktes Zuschneiden eines Klebebands vereinfacht werden.

Alternativ kann beispielsweise der Sensorhalter und/oder der Gegenhalter zylindrisch ausgebildet sein, einen zylindrischen Abschnitt umfassen oder eine alternative Geometrie aufweisen.

Insbesondere bevorzugt sind der Sensorhalter und der Gegenhalter ausgebildet, um in den definierten Ausgangspositionen zwischen 11 mm und 1 m, insbesondere zwischen 50 mm und 500 mm, insbesondere 200 mm, voneinander beabstandet ortsfest angebracht zu werden, wobei vorzugsweise die Anordnung in einem Montagezustand eine Lehre umfasst, die an dem Gegenhalter und dem Sensorhalter lösbar befestigt ist, wobei die Lehre den Gegenhalter und den Sensorhalter zueinander ausrichtet und einen definierten Abstand zwischen dem Gegenhalter und dem Sensorhalter einstellt.

Diese Beabstandung ermöglicht eine lokale Messung über einen im Vergleich zu Dehnungsmessstreifen größeren Messbereich. Dadurch können genauere Messungen erzielt und eine Vergleichbarkeit der Messungen erhöht werden.

Durch den Einsatz der Lehre im Montagezustand können der Sensorhalter und der Gegenhalter besonders einfach in den definierten Ausgangspositionen zueinander positioniert werden. Dadurch kann zum einen die exakte Ausrichtung als auch der exakte Abstand zwischen dem Sensorhalter und dem Gegenhalter gewährleistet werden.

Vorzugsweise kann die Lehre als ein Abstandhalter ausgebildet sein. Insbesondere kann die Lehre ein Balken sein, der in einem definierten Abstand Aufnahmen zum Aufnehmen des Sensorhalters und des Gegenhalters aufweist. Die Aufnahmen können insbesondere als eine Vertiefung ausgestaltet sein und vorzugsweise eine Geometrie aufweisen, die eine exakte Ausrichtung des Sensorhalters und des Gegenhalters zueinander sicherstellt.

Vorzugsweise kann die Lehre Bohrungen im Bereich der Aufnahmen, insbesondere um die Aufnahmen herum, aufweisen. Die Bohrungen dienen insbesondere dazu, dass, insbesondere plattenförmige, Montagehilfsmittel auf einer Seite der Lehre im Bereich der Aufnahmen angeordnet und an der Lehre verschraubt werden können. Alternativ zu Bohrungen können insbesondere auch andere Durchgänge, wie z.B. Materialaussparungen, vorgesehen sein. Anstelle einer Verschraubung können die Montagehilfsmittel auch auf eine andere Art an der Lehre befestigt sein. Beispielsweise können auch die Montagehilfsmittel auf der Lehre verklebt werden.

Die Montagehilfsmittel können insbesondere die Aufnahmen auf einer Seite der Lehre bedecken. Der Gegenhalter und der Sensorhalter können vorzugsweise in die Aufnahmen der Lehre eingesetzt und insbesondere an den Montagehilfsmitteln die an der Lehre befestigt sind, lösbar befestigt, insbesondere verklebt oder verschraubt, werden.

Beispielsweise können der Sensorhalter und der Gegenhalter an der Lehre lösbar befestigt, insbesondere verklebt oder verschraubt, werden.

Durch den Einsatz der Lehre wird eine besonders einfache Montage gewährleistet. Gleichzeitig können Messfehler, die auf eine fehlerhafte Ausrichtung und/oder Beabstandung des Sensorhalters und des Gegenhalters zueinander zurückzuführen sind, vermieden werden. Zudem kann dadurch eine geringere Messunsicherheit gewährleistet werden.

Die Anordnung umfasst eine an dem Gegenhalter angeordnete Koppelstange, die sich ausgehend von dem Gegenhalter in Richtung der Sensoreinheit erstreckt. Die Koppelstange weist ein konkaves Ende auf. Die Sensoreinheit umfasst ein axial verschieblich geführtes Tastelement, das mit der Koppelstange in Verbindung steht, und die Koppelstange zwischen dem Gegenhalter und dem axial verschieblich geführten Tastelement eingespannt ist.

Erfindungsgemäß ist ein der Koppelstange zugewandtes Ende der Sensoreinheit insbesondere ein Tastkopf des axial verschieblich geführten Tastelements, in einer konkaven Rundung des konkaven Endes der Koppelstange angeordnet.

Durch die Anordnung des der Koppelstange zugewandten Endes der Sensoreinheit, insbesondere des Tastkopfs des axial verschieblich geführten Tastelements, in der konkaven Rundung des konkaven Endes der Koppelstange kann insbesondere eine Verkippung des Sensorhalters aus der definierten Ausgangsposition ausgeglichen werden. Das Tastelement kann insbesondere, wie vorstehend beschrieben, gefedert ausgeführt sein. Vorzugsweise kann die Sensoreinheit, wie ebenfalls vorstehend beschrieben, ein Tastelement, eine Spulenanordnung und einen mit dem Tastelement verbundenen, gegenüber der Spulenanordnung koaxial verschieblichen ferromagnetischen Kern umfassen.

Gemäß einem weiteren Aspekt wird die Aufgabe gelöst durch eine Verwendung einer Anordnung nach mindestens einem der vorhergehenden Ansprüche in einem Prüfstand bei einem zyklischen Ermüdungstest zur Dehnungsmessung an einem Bauteil einer Windenergieanlage, insbesondere einem Rotorblatt.

Ein zyklischer Ermüdungstest kann sich vorzugsweise dadurch auszeichnen, dass Dehnungsschwingweiten von mehr als 3000 µm/m, insbesondere zwischen 3000 µm/m und 4000 µm/m oder mehr als 4000 µm/m vorgesehen sind. Zudem können insbesondere mehr als 1e6, insbesondere mehr als 1e7, Zyklen vorgesehen sein.

Gemäß einem weiteren Aspekt wird die Aufgabe gelöst durch ein Verfahren zur Montage einer Anordnung zur Dehnungsmessung an einem Bauteil einer Windenergieanlage nach Anspruch 13.

Das ortsfeste Anbringen des Sensorhalters und des Gegenhalters an der Oberfläche des Bauteils kann insbesondere ein Aufbringen eines Klebemittels auf einer Unterseite des Sensorhalters und einer Unterseite des Gegenhalters, ein Anordnen des Sensorhalters und des Gegenhalters auf der Oberseite des Bauteils, sodass die Unterseite des Sensorhalters und die Unterseite des Gegenhalters der Oberfläche des Bauteils zugewandt sind, umfassen. Insbesondere können der Gegenhalter und der Sensorhalter anschließend angedrückt werden.

Insbesondere kann das Klebemittel ein doppelseitiges Klebeband sein. Hierbei ist zudem vorgesehen, dass das doppelseitige Klebeband entsprechend der Unterseite des Gegenhalters und der Unterseite des Sensorhalters zugeschnitten, eine Schutzfolie abgezogen und an der Unterseite des Sensorhalters bzw. der Unterseite des Gegenhalters verklebt wird. Im Anschluss kann eine Schutzfolie einer zweiten Klebeseite abgezogen werden, um den Sensorhalter bzw. den Gegenhalter auf der Oberseite des Bauteils zu verkleben und dadurch zu befestigen.

Gemäß einer bevorzugten Fortbildung ist vorgesehen, dass der Schritt des Einstellens der definierten Ausgangsposition des Sensorhalters und der definierten Ausgangsposition des Gegenhalters zueinander mittels der Lehre ein Anordnen der Lehre an dem Sensorhalter und dem Gegenhalter umfasst, umfassend Entfernen der Lehre von dem Sensorhalter und dem Gegenhalter, insbesondere nach dem ortsfesten Anbringen des Sensorhalters und des Gegenhalters an der Oberfläche des Bauteils in den definierten Ausgangspositionen zueinander.

In einer bevorzugten Ausführungsvariante des Verfahrens ist vorgesehen, dass das Verfahren ein Anordnen einer Koppelstange an dem Gegenhalter, insbesondere Einführen eines dem Gegenhalter zugewandten Endes der Koppelstange in eine Ausnehmung des Gegenhalters, umfasst, sodass eine Längsachse der Koppelstange im Wesentlichen auf der Messachse liegt, wobei vorzugsweise die Sensoreinheit mit einem von dem Gegenhalter abgewandten Ende der Koppelstange in Verbindung steht, insbesondere ein Tastkopf eines Tastelements der Sensoreinheit mit dem von dem Gegenhalter abgewandten Ende der Koppelstange in Verbindung steht.

Vorzugsweise kann sich hierbei die Sensoreinheit, insbesondere das Tastelement, koaxial zu der Koppelstange erstrecken.

Insbesondere bevorzugt ist ein Verspannen der Sensoreinheit und der Koppelstange miteinander vorgesehen, sodass die Koppelstange zwischen Sensoreinheit und Gegenelement verspannt ist. Hierbei kann vorzugsweise zunächst das dem Gegenhalter zugewandte Ende der Koppelstange in die Ausnehmung des Gegenhalters eingeführt werden. Im Anschluss kann insbesondere die Sensoreinheit an dem Sensorhalter angeordnet werden. Danach kann die Sensoreinheit insbesondere mittels der Koppelstange eingespannt werden. Hierbei kann insbesondere eine Mitte eines verfügbaren Hubes der Sensoreinheit eingestellt werden.

Die Montage der Anordnung kann insbesondere folgende Schritte, vorzugweise in dieser Reihenfolge, umfassen: Befestigen des Sensorhalters und es Gegenhalters an der Lehre, Kleben des Sensorhalters und des Gegenhalters auf die Oberfläche des Bauteils, Entfernen der Lehre von dem Sensorhalter und dem Gegenhalter, Einführen eines Endes der Koppelstange in die Ausnehmung des Gegenhalters, Durchführen der Sensoreinheit durch eine Durchgangsöffnung des Sensorhalters, Positionieren des Tastelements, insbesondere des Tastkopfs und Verklemmen der Sensoreinheit, insbesondere mittels einer Plastikschraube, in dem Sensorhalter,

Insbesondere kann das Tastelement in Endlage verspannt sein. Dadurch kann insbesondere gewährleistet werden, dass eine Verkippung des Sensorhalters und/oder eine Verkippung des Gegenhalters einen geringen oder keinen Einfluss auf das Messergebnis hat.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen verwiesen.

Die vorliegend beschriebenen Lösungen sind nicht auf den Einsatz einer Dehnungsmessung an einem Rotorblatt einer Windenergieanlage beschränkt, auch wenn das Verfahren hier besonders vorteilhaft und auf wirtschaftliche Art und Weise eingesetzt werden kann.

Bevorzugte Ausführungsbeispiele werden beispielhaft anhand der beiliegenden Figuren beschrieben. Es zeigen:
- Figur 1:: eine schematische, dreidimensionale Ansicht einer beispielhaften Ausführungsform einer Windenergieanlage;
- Figur 2:: eine beispielhafte Ausführungsvariante einer Anordnung zur Dehnungsmessung;
- Figur 3A:: eine beispielhafte Darstellung einer Lehre in einer Draufsicht;
- Figuren 3B, 3C:: beispielhafte Darstellungen einer Lehre mit einem Gegenhalter und einem Sensorhalter in unterschiedlichen Perspektiven;
- Figur 4A:: beispielhafte Darstellungen eines Sensorhalters bzw. eines Gegenhalters in unterschiedlichen Perspektiven;
- Figur 4B:: eine beispielhafte Darstellung eines Montagehilfsmittels in einer Draufsicht;
- Figur 5:: beispielhafte Ausgestaltungen der Enden einer Koppelstange;
- Figur 6:: eine beispielhafte Darstellung der Verfahrensschritte eines Verfahrens zur Dehnungsmessung; und
- Figur 7:: eine beispielhafte Darstellung der Verfahrensschritte eines Verfahrens zur Montage einer Anordnung zur Dehnungsmessung.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

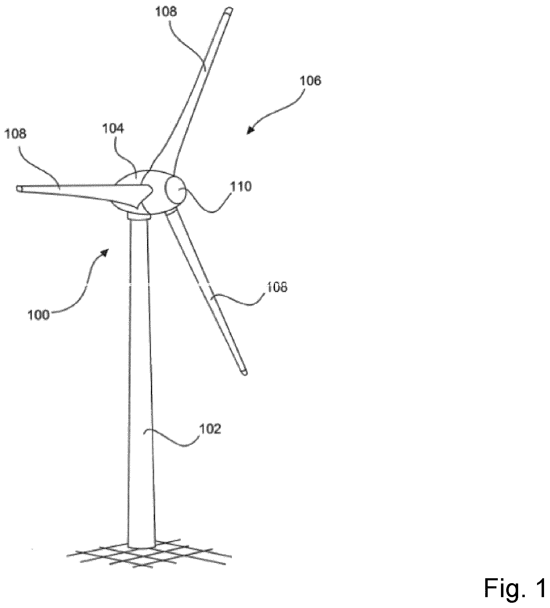

Die Erläuterung der Erfindung anhand von Beispielen unter Bezugnahme auf die Figuren erfolgt insbesondere im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch.

Figur 1 zeigt eine schematische, dreidimensionale Ansicht einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

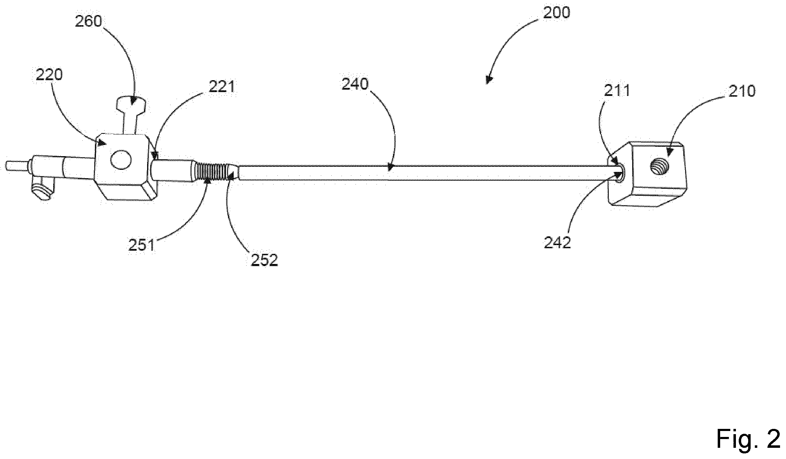

Figur 2 zeigt eine beispielhafte Darstellung einer Anordnung zur Dehnungsmessung 200. Die Anordnung 200 umfasst einen Sensorhalter 220 und einen Gegenhalter 210. Der Sensorhalter 220 und der Gegenhalter 210 sind in dem hier gezeigten Beispiel zueinander ausgerichtet und in einem definierten Abstand zueinander in ihren definierten Ausgangspositionen auf einer Oberfläche eines Bauteils ortsfest angebracht. Insbesondere bevorzugt können der Sensorhalter 220 und der Gegenhalter 210 jeweils mittels eines doppelseitigen Klebebands (in Figur 2 nicht gezeigt) auf der Oberfläche ortsfest befestigt sein.

Der Gegenhalter 210 und der Sensorhalter 220 sind als im Wesentlichen quadratische Klötze ausgebildet. Dadurch können der Gegenhalter 210 und der Sensorhalter 220 besonders einfach exakt zueinander ausgerichtet werden.

Die Anordnung 200 umfasst zudem eine Koppelstange 240. Ein dem Gegenhalter 210 zugewandtes Ende 242 ist in einer Ausnehmung 211 angeordnet. Die Koppelstange 240 erstreckt sich ausgehend von dem Gegenhalter 210 entlang einer Messachse in Richtung der Sensoreinheit.

Der Sensorhalter 220 weist eine Durchgangsöffnung 221 auf, durch die die Sensoreinheit hindurchgeführt ist. Die Sensoreinheit ist vorzugsweise koaxial zu der Koppelstange 240. Insbesondere liegen sowohl die Sensoreinheit als auch die Koppelstange 240 auf der Messachse. Vorzugsweise ist die Durchgangsöffnung 221 des Sensorhalters 220 und die Ausnehmung 211 des Gegenhalters 210 auf Höhe der Messachse.

Die Sensoreinheit ist in dem hier gezeigten Beispiel mittels einer Plastikschraube 260 in der Durchgangsöffnung 221 verklemmt und somit ortsfest fixiert.

Die Sensoreinheit umfasst ein gefedertes Tastelement mit einer Rückstellfeder 251 und einem Tastkopf 252, eine in einem Gehäuse angeordnete Spulenanordnung und einen mit dem Tastelement verbundenen, gegenüber der Spulenanordnung koaxial verschieblichen ferromagnetischen Kern. Über den Kern kann eine Spannung in der Spulenanordnung, insbesondere in Sekundärspulen, induziert werden. Diese ändert sich vorzugweise, wenn sich dieser Kern, der mit der Koppelstange 240 über das Tastelement verbunden ist, bewegt, und liefert dadurch ein Maß für dessen Auslenkung. Durch die Verbindung des Tastelements mit der Koppelstange 240 über den Tastkopf 252, steht die Sensoreinheit, also auch der Sensorhalter 220, mit dem Gegenhalter 210 in Verbindung.

Mittels der Rückstellfeder 251 kann das Sensorelement mit Hilfe der Koppelstange 240 im Sensorhalter 220 eingespannt werden.

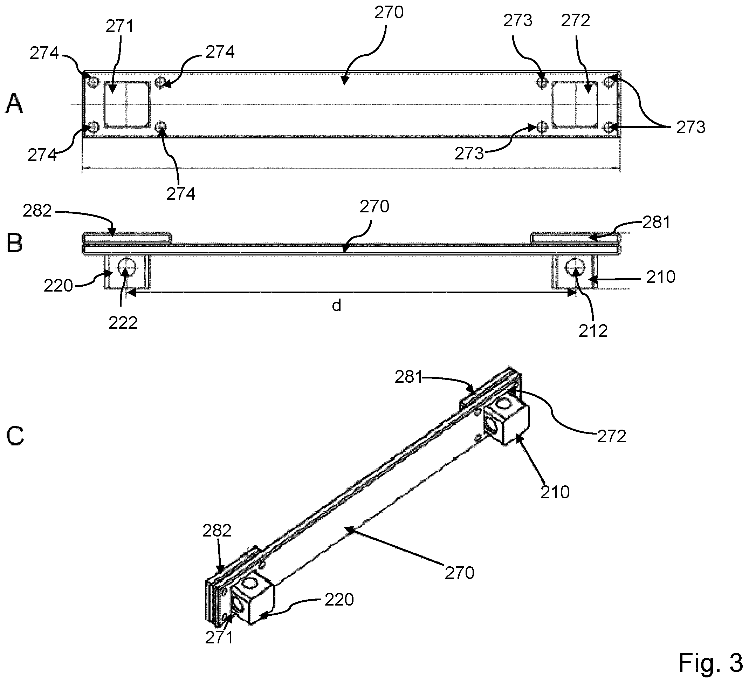

In Figur 3A ist eine beispielhafte Darstellung einer Lehre 270 gezeigt. Die hier gezeigte Ausführungsvariante der Lehre 270 ist im Wesentlichen als ein Balken ausgebildet der in einem definierten Abstand Aufnahmen 271, 272 zum Aufnehmen des Sensorhalters und des Gegenhalters (in Figur 3A nicht gezeigt) aufweist. Durch den Einsatz der Lehre im Montagezustand können der Sensorhalter und der Gegenhalter besonders einfach in den definierten Ausgangspositionen zueinander positioniert werden. Dadurch kann zum einen die exakte Ausrichtung als auch der exakte Abstand zwischen dem Sensorhalter und dem Gegenhalter gewährleistet werden.

Die Aufnahmen 271, 272 sind insbesondere als Durchführungen ausgebildet und weisen eine Geometrie und eine Abmessung eines Innenumfangs auf, die im Wesentlichen einer Geometrie und einer Abmessung eines Außenumfangs des Sensorhalters und des Gegenhalters entsprechen. Durch Einsetzen des Sensorhalters und des Gegenhalters in jeweils eine der Aufnahmen 271, 272 können diese exakt zueinander ausgerichtet werden und ein definierter Abstand gewährleistet werden.

Um eine Montage zu vereinfachen weist die Lehre 270 Bohrungen 273, 274 im Bereich der Aufnahmen 271, 272 auf. Die Bohrungen 273, 274 dienen insbesondere dazu, dass jeweils ein plattenförmiges Montagehilfsmittel 281, 282 auf einer Seite der Lehre 270 im Bereich der Aufnahmen 271, 272 angeordnet und an der Lehre 270 verschraubt werden können. Die Montagehilfsmittel 281, 282 können hierbei die Aufnahmen 271, 272 auf einer Seite der Lehre bedecken. Der Gegenhalters 210 und der Sensorhalter 220 können dann, wie in den Figuren 3B und 3C gezeigt, in die Aufnahmen 271, 272 der Lehre 270 eingesetzt werden und insbesondere an den Montagehilfsmitteln 281, 282, die an der Lehre befestigt sind, lösbar befestigt, insbesondere verklebt oder verschraubt, werden.

Wie in Figur 3B gezeigt, kann die Lehre 270 gewährleisten, dass der Sensorhalter 220 und der Gegenhalter 210 in einem definierten Abstand d zueinander angeordnet sind. Dieser definierte Abstand d, gemessen von einem Mittelpunkt 222 des Sensorhalters 220 auf Höhe der Messachse und einem Mittelpunkt 212 des Gegenhalters 210 auf Höhe der Messachse kann insbesondere zwischen 11 mm und 1 m, insbesondere zwischen 50 mm und 500 mm, insbesondere 200 mm, betragen.

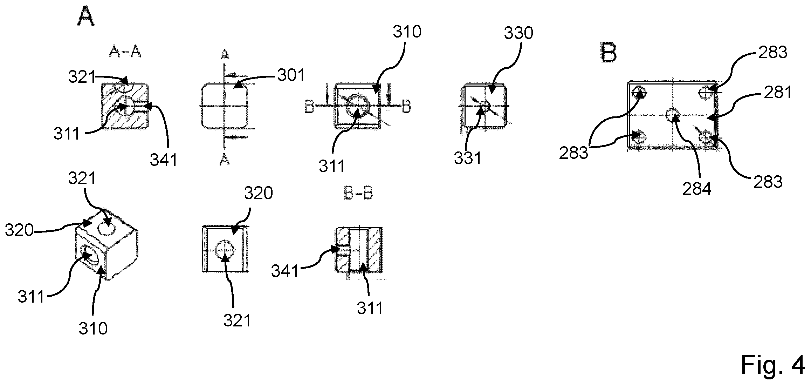

Figur 4A zeigt eine Ausgestaltung eines quadratischen Klotzes in sämtlichen Perspektiven, der sowohl als Sensorhalter als auch als Gegenhalter eingesetzt werden kann. Alternativ könnte ein Sensorhalter und/oder ein Gegenhalter beispielsweise auch zylindrisch ausgestaltet sein.

Der Sensorhalter und der Gegenhalter können insbesondere baugleich ausgestaltet sein. Der Klotz weist eine Unterseite 301 auf, die mittels eines Klebemittels auf einer Oberfläche eines Bauteils angeordnet werden kann. Die der Unterseite 301 gegenüberliegende Oberseite 330 weist ein Sackloch auf 331. Die Oberseite 330 des Klotzes kann in einem Montagezustand in einer Aufnahme einer Lehre angeordnet und an einem Montagehilfsmittel verschraubt werden. Hierzu wird ein Montagehilfsmittel 281, wie in Figur 4B gezeigt, verwendet und an einer Seite der Lehre über die Bohrungen 283 des Montagehilfsmittels 281 und in der Lehre angeordnete korrespondierende Bohrungen befestigt. Das Sackloch 331 ist korrespondierend zu der Bohrung 284 des Montagehilfsmittels 281 ausgebildet, um das Montagehilfsmittel 281 an dem Klotz zu verschrauben.

Der Klotz weist zudem eine erste Seite 310 auf, in der eine Öffnung einer Durchgangsöffnung 311 angeordnet ist. Die Durchgangsöffnung 311 erstreckt sich von der ersten Seite 310 zu einer gegenüberliegenden Seite und ist insbesondere dazu ausgebildet eine Sensoreinheit durchzuführen.

Eine zweite Seite 320 weist eine Ausnehmung 321 auf. Die Ausnehmung kann insbesondere einen konkaven, insbesondere halbkreisförmigen Querschnitt aufweisen. Insbesondere kann die zweite Seite 320 eine der Koppelstange zugewandte Seite sein, wobei die Ausnehmung 321 ausgebildet ist, um ein dem Klotz zugewandtes Ende der Koppelstange aufzunehmen.

Ein Sackloch 341 einer weiteren Seite erstreckt sich von dieser Seite bis zu der Durchgangsöffnung 311, wobei das Sackloch 341 orthogonal zu der Durchgangsöffnung 311 ausgebildet ist. Nachdem die Lehre, insbesondere nach einer Montage des Sensorhalters und des Gegenhalters auf einer Oberfläche des Bauteils, von dem Klotz entfernt wurde und eine Sensoreinheit durch die Durchgangsöffnung 311 durchgeführt wurde, kann eine Schraube in dem Sackloch 343 verschraubt werden, um die Sensoreinheit in der Durchgangsöffnung 311 zu fixieren.

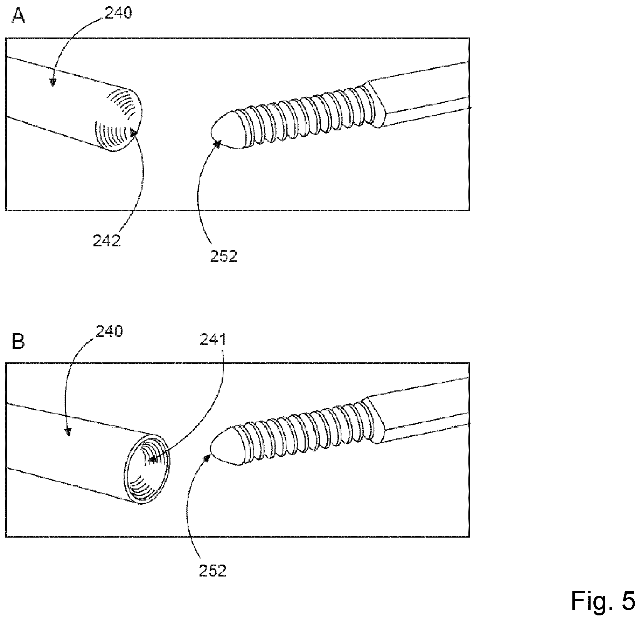

In den Figuren 5A, 5B sind Enden 241, 242 einer Koppelstange 240 detailliert gezeigt. Figur 5A zeigt ein konvexes Ende 242 der Koppelstange 240, das insbesondere in einer konkaven Ausnehmung des Gegenhalters angeordnet werden kann. Figur 5B zeigt ein konkaves Ende 241 der Koppelstange 240, das insbesondere ausgebildet ist, um in der konkaven Rundung einen Tastkopf 252 der Sensoreinheit aufzunehmen.

Durch die Lagerung des konvexen Endes 242 der Koppelstange 240 in einer konkaven Ausnehmung des Gegenhalters und die Lagerung eines der Koppelstange 240 zugewandten Endes der Sensoreinheit, insbesondere eines Tastkopfs 252 des axial verschieblich geführten Tastelements, in der konkaven Rundung des konkaven Endes 241 der Koppelstange 240 können bei dem zyklischen Erfassen der Änderung des Abstands auftretende Verkippungen des Sensorhalters und/oder des Gegenhalters ausgeglichen werden.

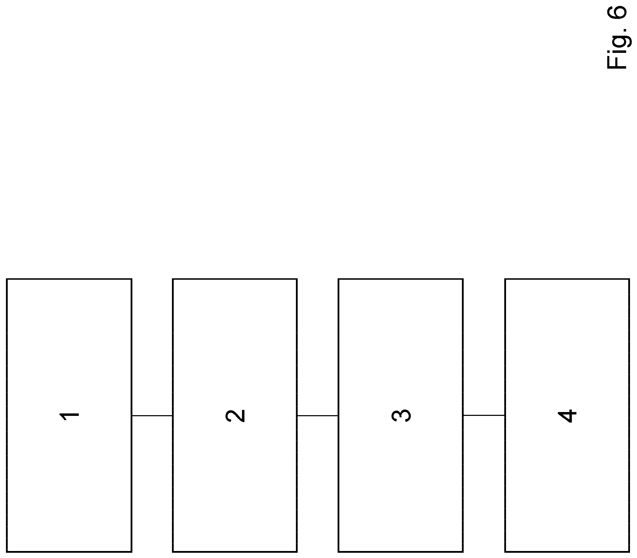

In Figur 6 sind beispielhafte Verfahrensschritte eines Verfahrens zur Dehnungsmessung an einem Bauteil einer Windenergieanlage, insbesondere einem Rotorblatt, gezeigt. Hierbei ist im Schritt 1 vorgesehen, dass ein Sensorhalter und ein Gegenhalter bereitgestellt werden. Der Sensorhalter und der Gegenhalter sind hierbei an einer Oberfläche des Bauteils in definierten Ausgangspositionen zueinander ortsfest angebracht. In Schritt 2 wird eine vom Sensorhalter gehaltene Sensoreinheit bereitgestellt. Ein zyklisches Erfassen einer Änderung eines Abstands zwischen dem Sensorhalter und dem Gegenhalter erfolgt in Schritt 3. Diese Änderung des Abstands kann mittels der Sensoreinheit auf Höhe einer von der Oberfläche des Bauteils beabstandeten Messachse erfasst werden. In Schritt 4 erfolgt ein zyklisches Berechnen einer Dehnung des Bauteils unter Berücksichtigung der Höhe der von der Oberfläche des Bauteils beabstandeten Messachse und/oder einer neutralen Faser des Bauteils.

Mit dem hier beschriebenen Verfahren kann insbesondere eine Standardabweichung von etwa 0,3 % erreicht werden. Dadurch kann eine deutlich reduzierte Standardabweichung im Vergleich zu bekannten Verfahren zur Dehnungsmessung, insbesondere mittels Dehnungsmessstreifen, erzielt werden.

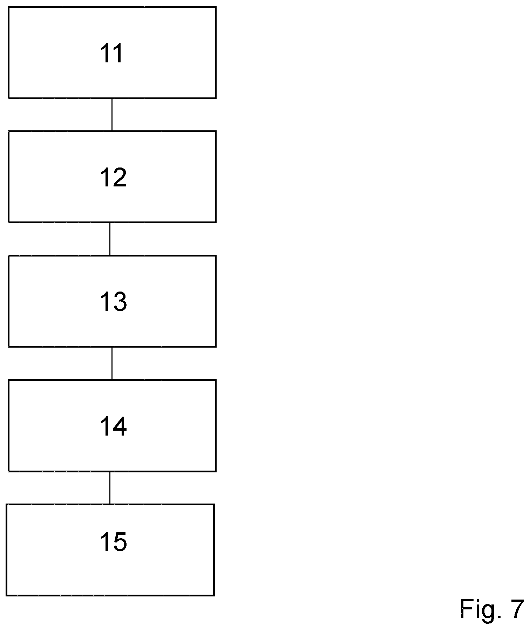

Figur 7 zeigt beispielhaft Verfahrensschritte eines Verfahrens zur Montage einer Anordnung zur Dehnungsmessung an einem Bauteil einer Windenergieanlage, insbesondere einem Rotorblatt. In einem Schritt 11 werden ein Sensorhalter und ein Gegenhalter bereitgestellt. Im Anschluss daran werden in Schritt 12 eine definierte Ausgangsposition des Sensorhalters und eine definierte Ausgangsposition des Gegenhalters zueinander eingestellt. Dies kann insbesondere mittels einer Lehre erfolgen. In Schritt 13 kann dann der Sensorhalter und der Gegenhalter an einer Oberfläche des Bauteils in den definierten Ausgangspositionen zueinander ortsfest angebracht werden. Schritt 14 sieht ein Anordnen einer Sensoreinheit an dem Sensorhalter vor. Die Sensoreinheit wird hierbei auf Höhe einer von der Oberfläche des Bauteils beabstandeten Messachse angebracht. Schließlich kann in Schritt 15 die Sensoreinheit am Sensorhalter ortsfest fixiert werden.

Die hier beschriebene Lösung hat verschiedene Vorteile. Insbesondere können dadurch zyklische Ermüdungstests mit sehr hohen Dehnungswechsel und sehr vielen Zyklen durchgeführt werden. Durch eine hohe Zuverlässigkeit der beschriebenen Lösung können insbesondere Kosten reduziert werden, indem das Risiko eines Ausfalls einer Anordnung zur Dehnungsmessung während eines zyklischen Ermüdungstests reduziert oder verhindert wird. Darüber hinaus kann eine absolute Dehnung eines Bauteils mit einer deutlich höheren Genauigkeit im Vergleich zu bekannten Lösungen gemessen werden.

Durch die hier beschriebenen Lösungen kann insbesondere auch eine Langlebigkeit der Anordnung gewährleistet werden. Darüber hinaus kann die Anordnung insbesondere mehrfach wiederverwendet werden.

### Bezugszeichenliste

- 1: Schritt - Bereitstellen eines Sensorhalters und eines Gegenhalters
- 2: Schritt - Bereitstellen einer vom Sensorhalter gehaltenen Sensoreinheit
- 3: Schritt - zyklisches Erfassen einer Änderung eines Abstands zwischen dem Sensorhalter und dem Gegenhalter
- 4: Schritt - zyklisches Berechnen einer Dehnung des Bauteils unter Berücksichtigung der Höhe der von der Oberfläche des Bauteils beabstandeten Messachse und/oder einer neutralen Faser des Bauteils
- 11: Schritt - Bereitstellen eines Sensorhalters und eines Gegenhalters
- 12: Schritt - Einstellen einer definierten Ausgangsposition des Sensorhalters und einer definierten Ausgangsposition des Gegenhalters zueinander
- 13: Schritt - ortsfestes Anbringen des Sensorhalters und des Gegenhalters an einer Oberfläche des Bauteils in den definierten Ausgangspositionen zueinander
- 14: Schritt - Anordnen einer Sensoreinheit an dem Sensorhalter
- 15: Schritt - ortsfestes Fixieren der Sensoreinheit an dem Sensorhalter
- 100: Windenergieanlage
- 102: Turm
- 104: Gondel
- 106: Rotor
- 108: Rotorblatt
- 110: Spinner
- 200: Anordnung zur Dehnungsmessung / Anordnung
- 210: Gegenhalter
- 211: Ausnehmung
- 212: Mittelpunkt
- 220: Sensorhalter
- 221: Durchgangsöffnung
- 222: Mittelpunkt
- 240: Koppelstange
- 241: konkaves Ende / der Sensoreinheit zugewandtes Ende
- 242: konvexes Ende / dem Gegenhalter zugewandtes Ende
- 251: Rückstellfeder
- 252: Tastkopf
- 260: Plastikschraube
- 270: Lehre
- 271, 272: Aufnahmen
- 273, 274: Bohrungen
- 281, 282: Montagehilfsmittel
- 283: Bohrungen
- 284: Bohrung
- 301: Unterseite
- 310: erste Seite
- 311: Durchgangsöffnung
- 320: zweite Seite
- 321: Ausnehmung
- 330: Oberseite
- 331: Sackloch
- 341: Sackloch
- d: Abstand

## Patentansprüche

1. Verfahren zur Dehnungsmessung an einem Bauteil einer Windenergieanlage, insbesondere einem Rotorblatt, umfassend die Schritte:
- Bereitstellen eines Sensorhalters und eines Gegenhalters (1),
wobei der Sensorhalter und der Gegenhalter an einer Oberfläche des Bauteils in definierten Ausgangspositionen zueinander ortsfest angebracht sind,
- Bereitstellen einer vom Sensorhalter gehaltenen Sensoreinheit (2),
∘ Bereitstellen einer an dem Gegenhalter angeordneten Koppelstange, die sich ausgehend von dem Gegenhalter in Richtung einem axial verschieblich geführten Tastelement der Sensoreinheit erstreckt, wobei die Koppelstange (240) ein konkaves Ende (241) aufweist,
∘ wobei ein der Koppelstange (240) zugewandtes Ende der Sensoreinheit in einer konkaven Rundung des konkaven Endes (241) der Koppelstange (240) angeordnet ist,
- zyklisches Erfassen einer Änderung eines Abstands zwischen dem Sensorhalter und dem Gegenhalter (3) mittels der Sensoreinheit auf Höhe einer von der Oberfläche des Bauteils beabstandeten Messachse, wobei der Schritt des Erfassens der Änderung des Abstands zwischen dem Sensorhalter und dem Gegenhalter ein Erfassen einer Änderung einer Position des Tastelements umfasst, und
- zyklisches Berechnen einer Dehnung des Bauteils unter Berücksichtigung der Höhe der von der Oberfläche des Bauteils beabstandeten Messachse und/oder einer neutralen Faser des Bauteils (4).

2. Verfahren nach dem vorhergehenden Anspruch, wobei das zyklische Erfassen der Änderung des Abstands zwischen dem Sensorhalter und dem Gegenhalter Dehnungsschwingweiten von mehr als 3000 µm/m, insbesondere zwischen 3000 µm/m und 4000 µm/m oder mehr als 4000 µm/m vorsieht.

3. Verfahren nach mindestens einem der vorhergehenden Ansprüche, wobei das zyklische Erfassen der Änderung des Abstands zwischen dem Sensorhalter und dem Gegenhalter mehr als 1e6, insbesondere mehr als 1e7, Zyklen vorsieht.

4. Verfahren nach mindestens einem der vorhergehenden Ansprüche, wobei durch das zyklische Erfassen einer Änderung eines Abstands zwischen dem Sensorhalter und dem Gegenhalter und durch das zyklische Berechnen der Dehnung des Bauteils die Dehnung des Bauteils über einen Materialbereich zwischen 11 mm und 1 m, insbesondere zwischen 50 mm und 500 mm, insbesondere 200 mm, gemittelt erfasst wird.

5. Verfahren nach mindestens einem der vorhergehenden Ansprüche, wobei die Koppelstange während dem zyklischen Erfassen der Änderung des Abstands zwischen dem Sensorhalter und dem Gegenhalter mit dem Tastelement in Verbindung steht.

6. Verfahren nach dem vorhergehenden Anspruch 5, umfassend Ausgleichen einer bei dem zyklischen Erfassen der Änderung des Abstands auftretenden Verkippung des Sensorhalters und/oder des Gegenhalters, sodass vorzugsweise die Koppelstange im Wesentlichen auf der Messachse verbleibt.

7. Anordnung zur Dehnungsmessung (200) an einem Bauteil einer Windenergieanlage (100), insbesondere einem Rotorblatt (108), umfassend
- einen Sensorhalter (220) und einen Gegenhalter (210), die ausgebildet sind, um in definierten Ausgangspositionen zueinander ortsfest angebracht zu werden, und
- eine von dem Sensorhalter (220) gehaltene Sensoreinheit,
wobei die Sensoreinheit ausgebildet ist, um eine Änderung eines Abstands (d) zwischen dem Sensorhalter (220) und dem Gegenhalter (210) auf Höhe einer von der Oberfläche des Bauteils beabstandeten Messachse zu erfassen,
- eine an dem Gegenhalter (210) angeordnete Koppelstange (240), die sich ausgehend von dem Gegenhalter in Richtung einem axial verschieblich geführten Tastelement der Sensoreinheit erstreckt,
wobei die Koppelstange (240) ein konkaves Ende (241) aufweist,
wobei ein der Koppelstange (240) zugewandtes Ende der Sensoreinheit in einer konkaven Rundung des konkaven Endes (241) der Koppelstange (240) angeordnet ist.

8. Anordnung (200) nach dem vorhergehenden Anspruch 7, umfassend ein Klebemittel, insbesondere ein doppelseitiges Klebeband, das ausgebildet ist, um den Sensorhalter (220) und den Gegenhalter (210) ortsfest auf der Oberfläche des Bauteils zu fixieren, wobei vorzugsweise das Klebemittel Acrylat umfasst oder aus Acrylat besteht und/oder eine Haftkraft von mindestens 300 N/100 mm aufweist und/oder ausgebildet ist, um einer Scherspannung von mindestens 400 kPa zu widerstehen.

9. Anordnung (200) nach mindestens einem der vorhergehenden Ansprüche 7 oder 8, wobei der Sensorhalter (220) und/oder der Gegenhalter (210) eckig, insbesondere quadratisch oder quaderförmig ausgebildet ist / sind.

10. Anordnung (200) nach mindestens einem der vorhergehenden Ansprüche 7 bis 9, wobei der Sensorhalter (220) und der Gegenhalter (210) ausgebildet sind, um in den definierten Ausgangspositionen zwischen 11 mm und 1 m, insbesondere zwischen 50 mm und 500 mm, insbesondere 200 mm, voneinander beabstandet ortsfest angebracht zu werden,
wobei vorzugsweise die Anordnung (200) in einem Montagezustand eine Lehre (270) umfasst, die an dem Gegenhalter (210) und dem Sensorhalter (220) lösbar befestigt ist, wobei die Lehre (270) den Gegenhalter (210) und den Sensorhalter (220) zueinander ausrichtet und einen definierten Abstand (d) zwischen dem Gegenhalter (210) und dem Sensorhalter (220) einstellt.

11. Anordnung (200) nach mindestens einem der vorhergehenden Ansprüche 7 bis 10, umfassend eine an dem Gegenhalter (210) angeordnete Koppelstange (240), die sich ausgehend von dem Gegenhalter (210) in Richtung der Sensoreinheit erstreckt, wobei die Sensoreinheit das axial verschieblich geführte Tastelement umfasst, das mit der Koppelstange (240) in Verbindung steht, und die Koppelstange (240) zwischen dem Gegenhalter (210) und dem axial verschieblich geführten Tastelement eingespannt ist,
wobei vorzugsweise ein Tastkopf (252) des axial verschieblich geführten Tastelements in einer konkaven Rundung des konkaven Endes (241) der Koppelstange (240) angeordnet ist.

12. Verwendung einer Anordnung (200) nach mindestens einem der vorhergehenden Ansprüche 7 bis 11 in einem Prüfstand bei einem zyklischen Ermüdungstest zur Dehnungsmessung an einem Bauteil einer Windenergieanlage (100), insbesondere einem Rotorblatt (108).

13. Verfahren zur Montage einer Anordnung zur Dehnungsmessung an einem Bauteil einer Windenergieanlage, insbesondere einem Rotorblatt, umfassend die Schritte:
- Bereitstellen eines Sensorhalters und eines Gegenhalters (11),
- Bereitstellen einer an dem Gegenhalter angeordneten Koppelstange, wobei die Koppelstange (240) ein konkaves Ende (241) aufweist,
- wobei ein der Koppelstange (240) zugewandtes Ende der Sensoreinheit in einer konkaven Rundung des konkaven Endes (241) der Koppelstange (240) angeordnet ist,
- Einstellen einer definierten Ausgangsposition des Sensorhalters und einer definierten Ausgangsposition des Gegenhalters zueinander (12), insbesondere mittels einer Lehre,
- ortsfestes Anbringen des Sensorhalters und des Gegenhalters an einer Oberfläche des Bauteils in den definierten Ausgangspositionen zueinander (13),
- Anordnen einer Sensoreinheit an dem Sensorhalter (14) auf Höhe einer von der Oberfläche des Bauteils beabstandeten Messachse und
- ortsfestes Fixieren der Sensoreinheit an dem Sensorhalter (15).

14. Verfahren nach dem vorhergehenden Anspruch 13, wobei der Schritt des Einstellens der definierten Ausgangsposition des Sensorhalters und der definierten Ausgangsposition des Gegenhalters zueinander mittels der Lehre ein Anordnen der Lehre an dem Sensorhalter und dem Gegenhalter umfasst, umfassend
- Entfernen der Lehre von dem Sensorhalter und dem Gegenhalter, insbesondere nach dem ortsfesten Anbringen des Sensorhalters und des Gegenhalters an der Oberfläche des Bauteils in den definierten Ausgangspositionen zueinander (13).

15. Verfahren nach mindestens einem der vorhergehenden Ansprüche 13 oder 14, umfassend Anordnen einer Koppelstange an dem Gegenhalter, insbesondere Einführen eines dem Gegenhalter zugewandten Endes der Koppelstange in eine Ausnehmung des Gegenhalters, sodass eine Längsachse der Koppelstange im Wesentlichen auf der Messachse liegt,
wobei vorzugsweise die Sensoreinheit mit einem von dem Gegenhalter abgewandten Ende der Koppelstange in Verbindung steht, insbesondere ein Tastkopf eines Tastelements der Sensoreinheit mit dem von dem Gegenhalter abgewandten Ende der Koppelstange in Verbindung steht.

## Claims

1. Method for strain measurement on a component of a wind turbine, in particular a rotor blade, comprising the steps:
- providing a sensor holder and a counter holder (1),
wherein the sensor holder and the counter holder are fixedly mounted on a surface of the component in defined initial positions relative to each other,
- providing a sensor unit (2) held by the sensor holder,
∘ providing a coupling rod arranged on the counter holder, which extends from the counter holder towards an axially displaceable sensing element of the sensor unit, wherein the coupling rod (240) has a concave end (241),
∘ wherein an end of the sensor unit facing the coupling rod (240) is arranged in a concave curvature of the concave end (241) of the coupling rod (240),
- cyclically detecting a change of a distance between the sensor holder and the counter holder (3) by means of the sensor unit at the level of a measuring axis spaced from the surface of the component, wherein the step of detecting the change of the distance between the sensor holder and the counter holder comprises detecting a change in a position of the sensing element, and
- cyclically calculating an elongation of the component, taking into account the height of the measuring axis spaced from the surface of the component and/or a neutral fibre of the component (4).

2. Method according to the preceding claim, wherein the cyclic detection of the change of the distance between the sensor holder and the counter holder provides strain amplitudes of more than 3000 µm/m, in particular between 3000 µm/m and 4000 µm/m or more than 4000 µm/m.

3. Method according to at least one of the preceding claims, wherein the cyclic detection of the change of the distance between the sensor holder and the counter holder provides for more than 1e6, in particular more than 1e7, cycles.

4. Method according to at least one of the preceding claims, wherein the cyclic detection of a change in a distance between the sensor holder and the counter holder and by the cyclic calculation of the elongation of the component the elongation of the component is detected on average over a material range between 11 mm and 1 m, in particular between 50 mm and 500 mm, in particular 200 mm.

5. Method according to at least one of the preceding claims, wherein the coupling rod is in connection to the sensing element during the cyclic detecting of the change of the distance between the sensor holder and the counter holder.

6. Method according to the preceding claim 5, comprising compensating for a tilting of the sensor holder and/or the counter holder occurring during the cyclic detecting of the change of the distance, so that the coupling rod preferably remains substantially on the measuring axis.

7. Arrangement for strain measurement (200) on a component of a wind turbine (100), in particular a rotor blade (108), comprising
- a sensor holder (220) and a counter holder (210), which are designed to be mounted in defined initial positions relative to each other, and
- a sensor unit held by the sensor holder (220),
wherein the sensor unit is designed to detect a change of a distance (d) between the sensor holder (220) and the counter holder (210) at the level of a measuring axis spaced from the surface of the component,
- a coupling rod (240) arranged on the counter holder (210), which extends from the counter holder towards an axially displaceable sensing element of the sensor unit,
wherein the coupling rod (240) has a concave end (241),
wherein an end of the sensor unit facing the coupling rod (240) is arranged in a concave curvature of the concave end (241) of the coupling rod (240).

8. Arrangement (200) according to the preceding claim 7, comprising an adhesive, in particular a double-sided adhesive tape, which is designed to fix the sensor holder (220) and the counter holder (210) fixedly on the surface of the component, wherein the adhesive preferably comprises or consists of acrylate and/or has an adhesive force of at least 300 N/100 mm and/or is designed to withstand a shear stress of at least 400 kPa.

9. Arrangement (200) according to at least one of the preceding claims 7 or 8, wherein the sensor holder (220) and/or the counter holder (210) is/are angular, in particular square or cuboid in shape.

10. Arrangement (200) according to at least one of the preceding claims 7 to 9, wherein the sensor holder (220) and the counter holder (210) are designed to be mounted fixedly at a distance of between 11 mm and 1 m, in particular between 50 mm and 500 mm, in particular 200 mm, from each other in the defined starting positions,
wherein, preferably, the arrangement (200) in an assembled state comprises a gauge (270) which is detachably attached to the counter holder (210) and the sensor holder (220), wherein the gauge (270) aligns the counter holder (210) and the sensor holder (220) with respect to each other and sets a defined distance (d) between the counter holder (210) and the sensor holder (220).

11. Arrangement (200) according to at least one of the preceding claims 7 to 10, comprising a coupling rod (240) arranged on the counter holder (210), which extends from the counter holder (210) in the direction of the sensor unit,
wherein the sensor unit comprises the axially displaceable sensing element, which is in connection with the coupling rod (240), and the coupling rod (240) is clamped between the counter holder (210) and the axially displaceable sensing element,
wherein, preferably, a sensing head (252) of the axially displaceable sensing element is arranged in a concave curvature of the concave end (241) of the coupling rod (240).

12. Use of an arrangement (200) according to at least one of the preceding claims 7 to 11 in a test bench during a cyclic fatigue test for strain measurement on a component of a wind turbine (100), in particular a rotor blade (108).

13. Method for mounting an arrangement for strain measurement on a component of a wind turbine, in particular a rotor blade, comprising the steps:
- providing a sensor holder and a counter holder (11),
- providing a coupling rod arranged on the counter holder, wherein the coupling rod (240) has a concave end (241),
- wherein an end of the sensor unit facing the coupling rod (240) is arranged in a concave curvature of the concave end (241) of the coupling rod (240),
- setting a defined initial position of the sensor holder and a defined initial position of the counter holder relative to each other (12), in particular by means of a gauge,
- fixedly attaching the sensor holder and the counter holder to a surface of the component in the defined initial positions relative to each other (13),
- arranging a sensor unit on the sensor holder (14) at the height of a measuring axis spaced from the surface of the component, and
- fisedly fixing the sensor unit in place on the sensor holder (15).

14. Method according to the preceding claim 13, wherein the step of setting the defined initial position of the sensor holder and the defined initial position of the counter holder relative to each other by means of the gauge comprises arranging the gauge on the sensor holder and the counter holder, comprising
- removing the gauge from the sensor holder and the counter holder, in particular after the sensor holder and the counter holder have been fixedly attached to the surface of the component in the defined initial positions relative to each other (13).

15. Method according to at least one of the preceding claims 13 or 14, comprising arranging a coupling rod on the counter holder, in particular inserting an end of the coupling rod facing the counter holder into a recess in the counter holder so that a longitudinal axis of the coupling rod lies substantially on the measuring axis,
Wherein, preferably, the sensor unit is in connection with an end of the coupling rod facing away from the counter holder, in particular a sensing head of a sensing element of the sensor unit is in connection with the end of the coupling rod facing away from the counter holder.

## Revendications

1. Procédé de mesure d'allongement sur un composant d'une éolienne, en particulier une pale, comprenant les étapes de :
- mise à disposition d'un support de capteur et d'un contre-support (1),
dans lequel le support de capteur et le contre-support sont montés à demeure l'un par rapport à l'autre sur une surface du composant dans des positions de départ définies,
- mise à disposition d'une unité de capteur (2) maintenue par le support de capteur,
∘ mise à disposition d'une tige d'accouplement disposée sur le contre-support, qui s'étend en partant du contre-support en direction d'un élément palpeur de l'unité de capteur guidé de manière axialement mobile, dans lequel la tige d'accouplement (240) présente une extrémité concave (241),
∘ dans lequel une extrémité de l'unité de capteur orientée vers la tige d'accouplement (240) est disposée dans un arrondi concave de l'extrémité concave (241) de la tige d'accouplement (240),
- détection cyclique d'une modification d'une distance entre le support de capteur et le contre-support (3) au moyen de l'unité de capteur à hauteur d'un axe de mesure éloigné de la surface du composant, dans lequel l'étape de détection de la modification de la distance entre le support de capteur et le contre-support comprend une détection d'une modification d'une position de l'élément palpeur, et
- calcul cyclique d'un allongement du composant en tenant compte de la hauteur de l'axe de mesure éloigné de la surface du composant et/ou d'une fibre neutre du composant (4).

2. Procédé selon la revendication précédente, dans lequel la détection cyclique de la modification de la distance entre le support de capteur et le contre-support prévoit des amplitudes d'oscillation d'allongement supérieures à 3000 µm/m, en particulier comprises entre 3000 µm/m et 4000 µm/m ou supérieures à 4000 µm/m.

3. Procédé selon au moins l'une des revendications précédentes, dans lequel la détection cyclique de la modification de la distance entre le support de capteur et le contre-support prévoit plus de 1e6, en particulier plus de 1e7, cycles.

4. Procédé selon au moins l'une des revendications précédentes, dans lequel, par la détection cyclique d'une modification d'une distance entre le support de capteur et le contre-support et par le calcul cyclique de l'allongement du composant, l'allongement du composant est mesuré en moyenne sur une plage de matériau comprise entre 11 mm et 1 m, en particulier entre 50 mm et 500 mm, en particulier 200 mm.

5. Procédé selon au moins l'une des revendications précédentes, dans lequel la tige d'accouplement est en liaison avec l'élément palpeur pendant la détection cyclique de la modification de la distance entre le support de capteur et le contre-support.

6. Procédé selon la revendication 5 précédente, comprenant la compensation d'un basculement du support de capteur et/ou du contre-support survenant lors de la détection cyclique de la modification de la distance, de sorte que la tige d'accouplement reste de préférence sensiblement sur l'axe de mesure.

7. Ensemble de mesure d'allongement (200) sur un composant d'une éolienne (100), en particulier une pale de rotor (108), comprenant
- un support de capteur (220) et un contre-support (210) qui sont réalisés pour être montés à demeure l'un par rapport à l'autre dans des positions de départ définies, et
- une unité de capteur maintenue par le support de capteur (220), dans lequel l'unité de capteur est réalisée pour détecter une modification d'une distance (d) entre le support de capteur (220) et le contre-support (210) à hauteur d'un axe de mesure éloigné de la surface du composant,
- une tige d'accouplement (240) disposée sur le contre-support (210), qui s'étend en partant du contre-support en direction d'un élément palpeur de l'unité de capteur guidé de manière axialement mobile,
dans lequel la tige d'accouplement (240) présente une extrémité concave (241),
dans lequel une extrémité de l'unité de capteur orientée vers la tige d'accouplement (240) est disposée dans un arrondi concave de l'extrémité concave (241) de la tige d'accouplement (240).

8. Ensemble (200) selon la revendication 7 précédente, comprenant un adhésif, en particulier un ruban adhésif double face, qui est réalisé pour fixer à demeure le support de capteur (220) et le contre-support (210) sur la surface du composant, dans lequel de préférence l'adhésif comprend de l'acrylate ou est constitué d'acrylate et/ou présente une force d'adhérence d'au moins 300 N/100 mm et/ou est réalisé pour résister à une contrainte de cisaillement d'au moins 400 kPa.

9. Ensemble (200) selon au moins l'une des revendications 7 ou 8 précédentes, dans lequel le support de capteur (220) et/ou le contre-support (210) est/sont réalisé(s) de manière polygonale, en particulier carrée ou parallélépipédique.

10. Ensemble (200) selon au moins l'une des revendications 7 à 9 précédentes, dans lequel le support de capteur (220) et le contre-support (210) sont réalisés pour être montés à demeure dans les positions de départ définies de manière espacée l'un de l'autre entre 11 mm et 1 m, en particulier entre 50 mm et 500 mm, en particulier 200 mm,
dans lequel l'ensemble (200) comprend de préférence dans un état de montage un gabarit (270) qui est attaché de manière amovible au contre-support (210) et au support de capteur (220), dans lequel le gabarit (270) aligne le contre-support (210) et le support de capteur (220) l'un par rapport à l'autre et règle une distance (d) définie entre le contre-support (210) et le support de capteur (220).

11. Ensemble (200) selon au moins l'une des revendications précédentes 7 à 10, comprenant une tige d'accouplement (240) disposée sur le contre-support (210) qui s'étend en partant du contre-support (210) en direction de l'unité de capteur,
dans lequel l'unité de capteur comprend l'élément palpeur guidé de manière axialement mobile, qui est en liaison avec la tige d'accouplement (240), et la tige d'accouplement (240) est serrée entre le contre-support (210) et l'élément palpeur guidé de manière axialement mobile,
dans lequel de préférence une sonde (252) de l'élément palpeur guidé de manière axialement mobile est disposée dans un arrondi concave de l'extrémité concave (241) de la tige d'accouplement (240).

12. Utilisation d'un ensemble (200) selon au moins l'une des revendications 7 à 11 précédentes dans un banc d'essai lors d'un essai de fatigue cyclique pour la mesure d'allongement sur un composant d'une éolienne (100), en particulier une pale de rotor (108).

13. Procédé de montage d'un ensemble de mesure d'allongement sur un composant d'une éolienne, en particulier une pale de rotor, comprenant les étapes de :
- mise à disposition d'un support de capteur et d'un contre-support (11),
- mise à disposition d'une tige d'accouplement disposée sur le contre-support, dans lequel la tige d'accouplement (240) présente une extrémité concave (241),
- dans lequel une extrémité de l'unité de capteur orientée vers la tige d'accouplement (240) est disposée dans un arrondi concave de l'extrémité concave (241) de la tige d'accouplement (240),
- réglage d'une position de départ définie du support de capteur et d'une position de départ définie du contre-support l'une par rapport à l'autre (12), notamment au moyen d'un gabarit,
- montage à demeure du support de capteur et du contre-support sur une surface du composant dans les positions de départ définies l'une par rapport à l'autre (13),
- disposition d'une unité de capteur sur le support de capteur (14) à hauteur d'un axe de mesure éloigné de la surface du composant et
- fixation à demeure de l'unité de capteur sur le support de capteur (15).

14. Procédé selon la revendication 13 précédente, dans lequel l'étape de réglage de la position de départ définie du support de capteur et de la position de départ définie du contre-support l'une par rapport à l'autre au moyen du gabarit comprend une disposition du gabarit sur le support de capteur et le contre-support, comprenant
- le retrait du gabarit du support de capteur et du contre-support, en particulier après le montage à demeure du support de capteur et du contre-support sur la surface du composant dans les positions de départ définies l'un par rapport à l'autre (13).

15. Procédé selon au moins l'une des revendications 13 ou 14 précédentes, comprenant la disposition d'une tige d'accouplement sur le contre-support, en particulier l'introduction d'une extrémité de la tige d'accouplement orientée vers le contre-support dans un évidement du contre-support, de sorte qu'un axe longitudinal de la tige d'accouplement se situe sensiblement sur l'axe de mesure,
dans lequel l'unité de capteur est de préférence en liaison avec une extrémité de la tige d'accouplement éloignée du contre-support, en particulier une sonde d'un élément palpeur de l'unité de capteur est en liaison avec l'extrémité de la tige d'accouplement éloignée du contre-support.
